# EUROPÄISCHE PATENTSCHRIFT

(11) **EP 1 111 276 B1**
(45) Veröffentlichungstag und Bekanntmachung des Hinweises auf die Patenterteilung: **28.03.2007**
(21) Anmeldenummer: 00124687.5
(22) Anmeldetag: 11.11.2000
(51) Int. Cl.: F16H 61/18

(54) **Schalthebel mit Rückwärtsgangsperre**
Gearshift lever with reverse gear lock
Levier de changement de vitesses à verrouillage de la marche arrière

(30) Priorität: 22.12.1999 DE 19962025
(43) Veröffentlichungstag der Anmeldung: 27.06.2001
(73) Patentinhaber: Volkswagen Aktiengesellschaft, 38436 Wolfsburg (DE)
(72) Erfinder: Ahrens, Gerald, 38165 Gross Brunsrode (DE)

(56) Entgegenhaltungen:
- EP-A- 0 834 683
- FR-A- 2 683 014
- US-A- 3 496 797
- US-A- 4 343 202
- US-A- 4 914 969

## Beschreibung

Die Erfindung betrifft einen Schalthebel, insbesondere für eine Schaltvorrichtung eines manuell schaltbaren Kraftfahrzeuggetriebes, mit einem Schalthebelkörper, mit einer formschlüssig wirksamen Rückwärtsgangsperre, die ein weitgehend unbewegliches karosserieseitiges Sperrelement und ein auf dem Schalthebel beweglich gelagertes schalthebelseitiges Sperrelement umfasst, und mit einer Schalthebellagerung, mittels der der Schalthebel um eine Wählachse und um eine im wesentlichen senkrecht dazu angeordnete Schaltachse schwenkbar gelagert ist.

In einem Kraftfahrzeug mit einem manuell schaltbaren Getriebe ist zumeist ein Schalthebel vorgesehen, um einen Gang einzulegen bzw. einen Gangwechsel vorzunehmen. Hierzu ist der Schalthebel zur Auswahl, der Schaltgasse um eine Wählachse und zum Einlegen des Ganges um eine im wesentlichen senkrecht dazu angeordnete Schaltachse schwenkbar gelagert. Zur Vermeidung eines unbeabsichtigten Einlegens des Rückwärtsganges ist üblicherweise von einem Fahrer eine Rückwärtsgangsperre zu überwinden bzw. zu lösen, um in die Schaltgasse des Rückwärtsganges oder von einer Neutralstellung der betreffenden Schaltgasse in die Schaltposition des Rückwärtsganges zu gelangen. Ob die gesamte Schaltgasse oder nur die Schaltposition des Rückwärtsganges derart gesichert ist, richtet sich jeweils danach, ob der betreffenden Schaltgasse nur der Rückwärtsgang oder zusätzlich ein Vorwärtsgang zugeordnet ist.

Es gibt Rückwärtsgangsperren, die als Kraftsperren ausgebildet sind und durch Aufbringen einer größeren Querkraft auf den Schalthebel überwindbar sind. Weit verbreitet sind aber auch formschlüssig wirksame Rückwärtsgangsperren, bei denen ein auf dem Schalthebel angeordnetes schalthebelseitiges Sperrelement gegen die Rückstellkraft mindestens eines Federelementes axial verschiebbar ist, um die Sperrwirkung eines mit diesem Sperrelement in Wechselwirkung stehenden karosserieseitigen Sperrelementes auszuschalten. Die Entsperrung der formschlüssig wirksamen Rückwärtsgangsperre kann z. B. erstens durch ein Niederdrücken des gesamten Schalthebels oder zweitens durch ein Anheben eines im oberen Bereich des Schalthebels angeordneten Zugringes erfolgen. Aus diversen Gründen, wie u.a. eines einfachen, platzsparenden und kostengünstigen Aufbaus, ergibt es sich, dass die Rückwärtsgangsperren zumeist im ersten Fall unterhalb der Schalthebellagerung, im zweiten Fall dagegen oberhalb der Schalthebellagerung angeordnet sind.
Aus der EP 0 084 751 A1 ist eine manuelle Gangschaltvorrichtung mit einer an einem Kraftfahrzeuggetriebe angeordneten Rückwärtsgangsperre bekannt. Dabei ist eine Wählstange an ihrem getriebeseitigen Ende mittels eines Kugelgelenkes beweglich an dem Kraftfahrzeuggetriebe gelagert und nimmt an ihrem schalthebelseitigen Ende über ein Drehgelenk den Schalthebel auf. An dem getriebeseitigen Ende weist die Schaltstange einen Hebel auf, in dem ein einziehbarer Sperrbolzen gelagert ist. Der Bolzen wirkt in seiner ausgefahrenen Normallage derart mit einem an dem Kraftfahrzeuggetriebe befestigten Anschlag zusammen, dass eine Drehung der Wählstange in eine Position, die der Schaltgasse des Rückwärtsganges entspricht, verhindert wird. Diese Rückwärtsgangsperre ist dadurch auszuschalten, dass ein Fahrer eine an dem Schalthebel beweglich gelagerte Griffhülse nach oben zieht, wodurch der über einen Seilzug mit der Griffhülse in Verbindung stehende Sperrbolzen eingezogen wird. Die vorgestellte Gangschaltvorrichtung ist verhältnismäßig unempfindlich gegenüber einer Bewegung der aus einem Antriebsmotor und dem Kraftfahrzeuggetriebe gebildeten Antriebseinheit. Nachteilig ist jedoch der große Aufwand an Übertragungsbauteilen und eine aufgrund der relativ großen Übertragungslänge geringe Schaltpräzision.

In der EP 0 834 683 A1 wird eine Getriebeschaltvorrichtung mit einer oberhalb der Schalthebellagerung angeordneten Rückwärtsgangsperre vorgestellt. Dabei besteht die Rückwärtsgangsperre in bekannter Weise aus einem karosserieseitigen Sperrelement und einem mit diesem in Wechselwirkung stehenden und auf einem zugeordneten Schalthebel verschiebbar gelagerten schalthebelseitigen Sperrelement, das durch einen am oberen Ende des Schalthebels angeordneten Zugring betätigbar ist. Um ein Versagen dieser formschlüssig wirksamen Rückwärtsgangsperre zu vermeiden, die z.B. durch ein unbeabsichtigtes Anstoßen des Schalthebels in Richtung quer zur Schaltachse verursacht werden kann und in einem Abbrechen oder Deformieren eines Sperrsteges des schalthebelseitigen Sperrelementes bestehen kann, weist das schalthebelseitige Sperrelement im Bereich der Lagerung in dem Schalthebel elastische Bestandteile auf. Diese ermöglichen zusammen mit Anschlägen eine begrenzte Relativbewegung zwischen dem Schalthebel und dem schalthebelseitigen Sperrelement, ohne die Funktionssicherheit der Rückwärtsgangsperre zu beeinträchtigen. Die Verbindung zwischen dem Zugring und dem schalthebelseitigen Sperrelement wird durch ein außerhalb des Schalthebels angeordneten Verbindungsbauteil hergestellt, das im Rahmen der Relativbewegung biegeweich ausgebildet ist. Nachteilig an der vorgestellten Getriebeschaltvorrichtung sind die relativ aufwendige Konstruktion und das große erforderliche Bauvolumen.

Weiter ist aus der als nächstliegenden Stand der Technik angesehenen US 4,914,969 ein Schalthebel für eine Schaltvorrichtung eines manuell schaltbaren Kraftfahrzeuggetriebes bekannt, der einen Schalthebelkörper, eine formschlüssig wirksame Rückwärtsgangsperre, die ein weitgehend unbewegliches karosserieseitiges Sperrelement und ein auf dem Schalthebelkörper beweglich gelagertes schalthebelseitiges Sperrelement umfasst, und eine Schalthebellagerung aufweist, mittels der der Schalthebel um eine Wahlachse und um eine im wesentlichen senkrecht dazu angeordnete Schaltachse schwenkbar gelagert ist, wobei die Rückwärtsgangsperre unterhalb der Schalthebellagerung angeordnet ist, wobei das schalthebelseitige Sperrelement zur Lösung der Rückwärtsgangsperre durch einen auf dem Schalthebelkörper angeordneten Zughebel betätigbar ist, und wobei ein einteiliges Verbindungselement, das außerhalb des Schalthebelkörpers und außerhalb der Schalthebellagerung angeordnet ist, den Zughebel mit dem schalthebelseitigen Sperrelement unmittelbar verbindet. Dabei wird das Verbindungselement durch Trägerelemente, die am Schaltkörper ausgebildet sind, in Abstand vom Schaltkörper gehalten.

Bei zunehmend beengten Einbauverhältnissen und der Tendenz, speziell bei Minivans und Kleintransportern, einen kompakten Schalthebel auf einer erhöhten Konsole zu verwenden, ergibt sich das Problem einen Schalthebel mit einer Rückwärtsgangsperre auszustatten, die wenig Bauraum erfordert, zuverlässig funktioniert, und einfach, kompakt und kostengünstig herstellbar bzw. montierbar ist.

Das Problem wird erfindungsgemäß durch einen Schalthebel gemäß Anspruch 1 gelöst.

Der Schalthebel ist insbesondere für die Schaltvorrichtung eines manuell schaltbaren Getriebes vorgesehen und weist einen Schalthebelkörper und eine formschlüssige wirksame Rückwärtsgangsperre auf. Diese umfasst ein weitgehend unbewegliches karosserieseitiges Sperrelement und ein auf dem Schalthebelkörper beweglich gelagertes schalthebelseitiges Sperrelement. Weiter weist der Schalthebel eine Schalthebellagerung auf, mittels der der Schalthebel um eine Wahlachse und um eine im Wesentlichen senkrecht dazu angeordnete Schaltachse schwenkbar gelagert ist. Die Rückwärtsgangsperre ist unterhalb der Schalthebellagerung angeordnet. Das schalthebelseitige Sperrelement der Rückwärtsgangsperre ist zur Lösung der Sperre durch einen auf dem Schalthebelkörper angeordneten Zugring betätigbar. Hierbei verbindet ein flexibles und einteiliges Verbindungselement den Zugring unmittelbar mit dem schalthebelseitigen Sperrelement. Das Verbindungselement ist außerhalb des Schalthebelkörpers und außerhalb der Schalthebellagerung angeordnet und liegt zur Verringerung des Bauvolumens an dem Schalthebelkörper eng an.

Vorteilhafte Ausgestaltungen des erfindungsgemäßen Schalthebels sind in den Unteransprüchen 2 bis 7 angegeben.

Durch die Anordnung der Rückwärtsgangsperre unterhalb der Schalthebellagerung ist im für den Fahrer sichtbaren Bereich wenig Bauraum erforderlich, so dass der Schalthebel relativ kurz und kompakt gehalten werden kann. Die Verwendung eines Zugringes zur Lösung der Rückwärtsgangsperre schließt eine irrtümliche Betätigung weitgehend aus und wird im Allgemeinen von dem Fahrer als komfortabel empfunden. Durch die Anordnung des Verbindungselementes außerhalb des Schalthebelkörpers und außerhalb der Schalthebellagerung ergibt sich eine in Herstellung und Montage unkomplizierte und somit preiswerte Lösung. Insbesondere die Schalthebellagerung wird von dem Verbindungselement umgangen und kann dadurch relativ einfach und preiswert ausgebildet sein, da interne Bohrungen und Führungen vermieden werden können. Der am Schalthebelkörper befindliche Teil des Verbindungselementes kann vorteilhaft unter einer flexiblen Schalthebelabdeckung für den Fahrer unsichtbar verborgen sein.

Das Verbindungselement ist zur Verringerung des Bauvolumens des Schalthebels flexibel ausgebildet und an dem Schalthebelkörper eng anliegend angeordnet. Durch das Verbindungselement wird im Falle einer Lösung der Rückwärtsgangsperre nur eine Zugkraft übertragen, so dass eine steife Ausbildung nicht erforderlich ist. Vielmehr kann sich das Verbindungselement durch die flexible Ausbildung selbsttätig der Kontur des Schalthebelkörpers anpassen und somit eng an diesem anliegen, was besonders im Bereich der größten Dicke des Schalthebels, die zumeist im Bereich der Schalthebellagerung auftritt, zur Erreichung eines geringen Bauvolumens von Bedeutung ist.

Das Verbindungselement ist nach einer bevorzugten Ausführungsform der Erfindung als Zugseil ausgebildet, da es somit hohe Flexibilität und hohe Zugfestigkeit zusammen mit geringem Raumbedarf und geringen Kosten aufweist.

Zur Verbesserung der Funktionssicherheit kann das Verbindungselement geführt gelagert sein, da es sich sonst unter Umständen bei geöffneter Rückwärtsgangsperre beim Loslassen verklemmen könnte, wodurch die Rückwärtsgangsperre nicht oder nicht vollständig geschlossen wurde.

Das Führungselement kann beispielsweise als Führungshülse ausgebildet sein, wobei diese einen geschlossenen oder einen offenen Querschnitt aufweisen kann, d.h. rohrförmig oder U-förmig aufgebaut sein kann. Die Führungshülse ist bevorzugt im Bereich der Schalthebellagerung an dem Schalthebelkörper befestigt, da hier zumeist die größte Dicke des Schalthebels auftritt und daher an dieser Stelle ein unerwünschtes Ausweichen des Verbindungselementes ohne ein Führungselement auftreten könnte.

Zur Führung des Verbindungselementes kann jedoch auch eine im Bereich der Schalthebellagerung in dem Schalthebelkörper angeordnete Führungsnut dienen, die in einfacher Weise herstellbar ist.

Da eine asymmetrische einseitige Einleitung einer Kraft zu einer Verkantung des entsprechenden Bauteils verbunden mit Schwergängigkeit und verstärktem Verschleiß führen kann, werden gemäß einer weiteren bevorzugten Ausführungsform der Erfindung zur Vermeidung einer derartigen Belastung des Zugringes und des schalthebelseitigen Sperrelementes mindestens zwei in Bezug auf die Längsachse des Schalthebels diametral zueinander angeordnete Verbindungselemente vorgesehen. Dadurch können in der Fertigung der zueinander beweglichen Bauteile größere Toleranzen zugelassen werden, was deren Herstellungskosten verringert. Im übrigen erhöht sich dadurch auch die Funktionssicherheit der Betätigungsvorrichtung der Rückwärtsgangsperre, da die Belastung der betreffenden Bauteile sinkt.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

In den Zeichnungen zeigen:
- Figur 1:: Eine Vorderansicht eines Schalthebels mit einer Rückwärtsgangsperre im Schnitt,
- Figur 2:: eine Vorderansicht einer ersten Ausführungsform einer Führung eines Verbindungselementes der Rückwärtsgangsperre im Schnitt und Ausriss,
- Figur 3:: eine zweite Ausführungsform einer Führung eines Verbindungselementes der Rückwärtsgangsperre, und
- Figur 4:: eine alternative Variante eines Schalthebels.

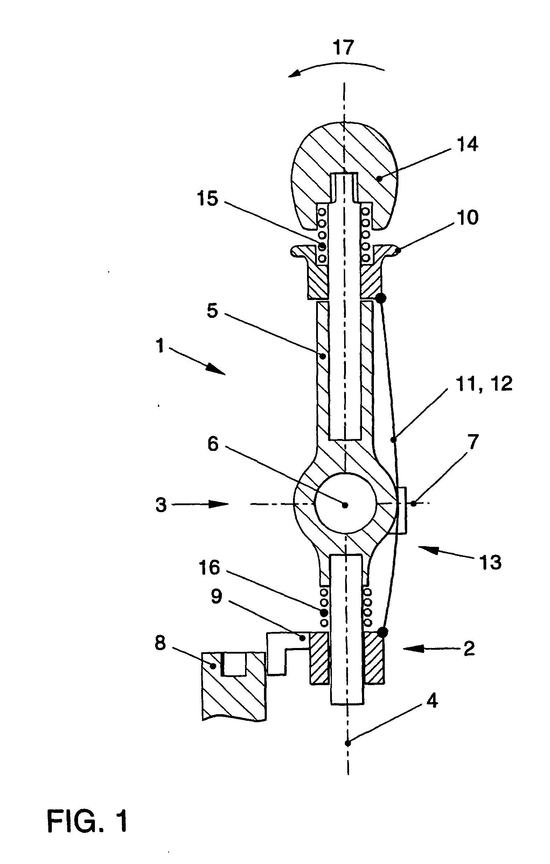

In der Figur 1 ist ein erfindungsgemäßer Schalthebel 1 mit einer Rückwärtsgangsperre 2 abgebildet, die unterhalb einer Schalthebellagerung 3 angeordnet ist. Der Schalthebel 1 weist eine Schalthebelachse 4 und einen Schalthebelkörper 5 auf, der mittels der Schalthebellagerung 3 um eine Wählachse 6 und um eine im wesentlichen senkrecht dazu angeordnete Schaltachse 7 schwenkbar gelagert ist. Die Rückwärtsgangsperre 2 ist formschlüssig wirksam ausgebildet und umfasst ein weitgehend unbewegliches karosserieseitiges Sperrelement 8 und ein mit diesem in Wechselwirkung stehendes und auf dem Schalthebelkörper 5 in Richtung der Schalthebelachse 4 verschiebbar gelagertes schalthebelseitiges Sperrelement 9. Das schalthebelseitige Sperrelement 9 ist zur Lösung der Rückwärtsgangsperre 2 durch einen auf dem Schalthebelkörper 5 angeordneten Zugring 10 betätigbar und steht mit diesem über ein als Seilzug 11 ausgebildetes Verbindungselement 12 in Verbindung. Der Seilzug 11 ist außerhalb des Schalthebelkörpers 5 und außerhalb der Schalthebellagerung 3 angeordnet und im Bereich der Schalthebellagerung 3 in einem dort befestigten Führungselement 13 geführt gelagert. Am oberen Ende des Schalthebels 1 ist ein Schaltknauf 14 am Schalthebelkörper 4 befestigt, an dem sich eine obere Rückstellfeder 15 abstützt, die den Zugring 10 in einer unteren Position hält. In gleicher Weise wird das schalthebelseitige Sperrelement 9 von einer unteren Rückstellfeder 16 in einer unteren, der aktivierten Rückwärtsgangsperre 2 entsprechenden Position gehalten.

In der durch die untere Rückstellfeder 16 vorgegebenen Ausgangsposition wird durch die Formgebung der Sperrelemente 8, 9 ein Verschwenken 17 des Schalthebels 1 um die Wählachse 6 in eine Schaltgasse, der der Rückwärtsgang zugeordnet ist, verhindert. Die Rückwärtsgangsperre 2 ist durch ein Anheben des Zugringes 10 und ein dadurch bedingtes Anheben des schalthebelseitigen Sperrelementes 9 ausschaltbar. Bei anderer Ausbildung der Sperrelemente 8, 9 wäre prinzipiell in gleicher Weise ein Verschwenken des Schalthebels 1 um die Schaltachse 7 in eine dem Rückwärtsgang zugeordnete Schaltposition verhinderbar, während das Verschwenken 17 in die entsprechende Schaltgasse dann möglich sein könnte. Letzteres käme besonders bei einer Anordnung des Rückwärtsganges und eines Vorwärtsganges in einer gemeinsamen Schaltgasse zur Anwendung.

Durch die Anordnung des Verbindungselementes 12 außerhalb des Schalthebelkörpers 5 und außerhalb der Schalthebellagerung 3 ergibt sich eine in Herstellung und Montage unkomplizierte und somit preiswerte Lösung. Insbesondere die Schalthebellagerung 3 wird von dem Verbindungselement 12 umgangen und kann dadurch relativ einfach und preiswert ausgebildet sein, da interne Bohrungen und Führungen vermieden werden. Durch die flexible Ausbildung des Verbindungselementes 12 kann dieses an dem Schalthebelkörper 5 eng anliegend angeordnet sein, wodurch sich eine platzsparende Bauweise ergibt. Das im Bereich der Schalthebellagerung 3 angeordnete Führungselement 13 dient der Verbesserung der Funktionssicherheit und verhindert ein Verklemmen des Verbindungselementes 12 bei geöffneter Rückwärtsgangsperre.

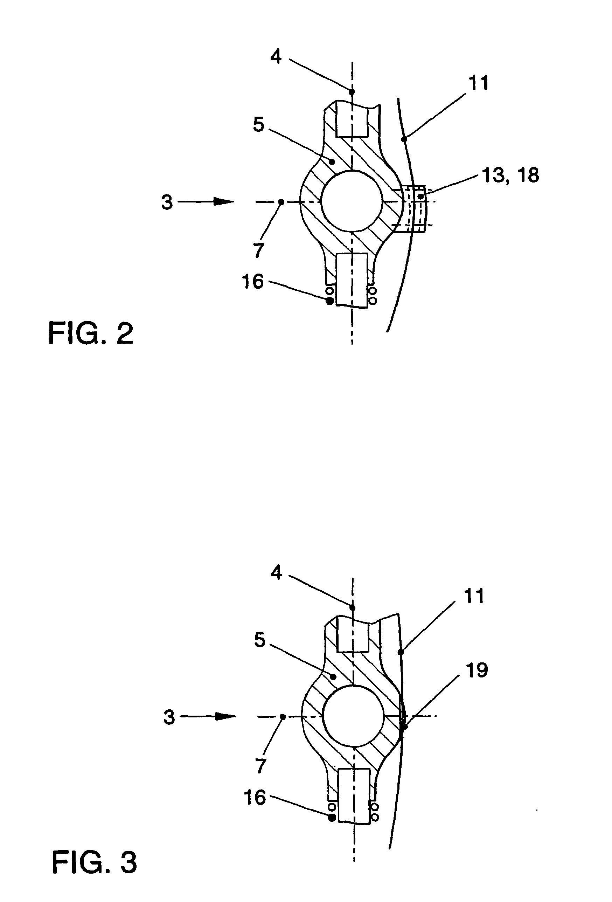

Den Figuren 2 und 3 sind zwei mögliche Ausgestaltungsvarianten zur Führung des als Seilzug 11 ausgebildeten Verbindungselementes 12 dargestellt.

In der Variante nach Figur 2 ist der Seilzug 11 durch ein im Bereich der Schalthebellagerung 3 angeordneten und dort an dem Schalthebelkörper 5 befestigtes Führungselement 13 geführt gelagert. Das Führungselement 13 ist im vorliegenden Fall als Führungshülse 18 mit geschlossenem ringförmigen Querschnitt ausgebildet, kann jedoch auch als offene Führungsrinne mit U-förmigem Querschnitt ausgebildet sein. Als Material für das Führungselement 13 kommt insbesondere ein spritzbarer Kunststoff, z.B. Polyamid in Frage, so dass die Führungshülse 18 als Spritzgussteil preiswert hergestellt werden kann.

In der Variante nach Figur 3 ist der Seilzug 11 durch eine im Bereich der Schalthebellagerung 3 in dem Schalthebelkörper 5 angeordneten Führungsnut 19 geführt gelagert. Die Führungsnut 19 kann, sofern es sich bei dem Schalthebelkörper 5 um ein Gussteil handelt, durch eine entsprechende Gussform schon bei der Herstellung des Rohlings oder durch nachträgliche Bearbeitung, z.B. Fräsen, in den Schalthebelkörper 5 eingearbeitet werden. Im Vergleich zur Verwendung eines Führungselementes 13 gemäß Figur 2 kann dadurch ein Bauteil sowie der entsprechende Montageschritt eingespart werden.

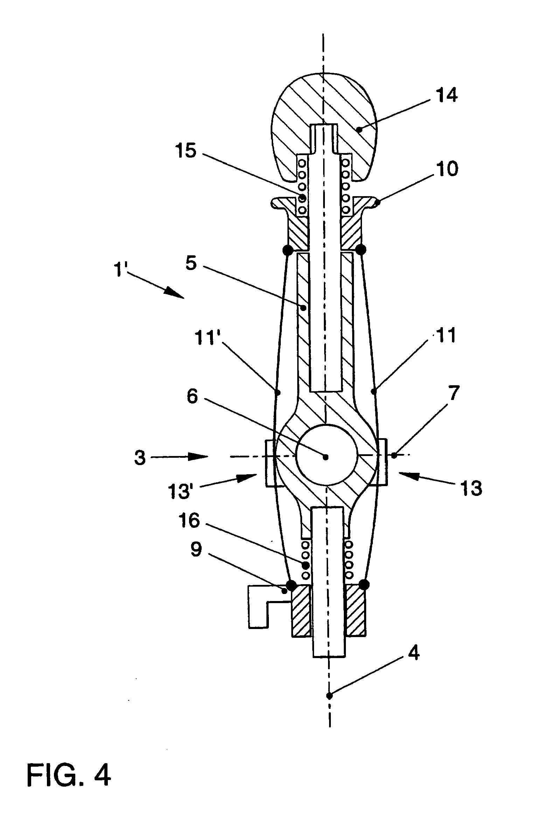

In der Figur 4 ist ein erfindungsgemäßer Schalthebel 1' dargestellt, der weitgehend dem in der Figur 1 abgebildeten Schalthebel 1 entspricht. Die Unterschiede beziehen sich im wesentlichen auf die Verbindung zwischen dem Zugring 10 und dem schalthebelseitigen Sperrelement 9 der Rückwärtsgangsperre 2. Zur Vermeidung einer einseitigen asymmetrischen Krafteinleitung in das schalthebelseitige Sperrelement 9 und den Zugring 10 ist im vorliegenden Fall zusätzlich zu dem ersten Seilzug 11 ein zweiter Seilzug 11' vorgesehen, der in Bezug auf die Schalthebelachse 4 diametral zu dem ersten Seilzug 11 angeordnet ist. Dadurch wird eine Verkantung des schalthebelseitigen Sperrelementes 9 und des Zugringes 10 auf dem Schalthebelkörper 5 vermieden. Demzufolge ist eine Schwergängigkeit und ein verstärkter Verschleiß der durch die beweglichen Bauteile 5, 9, 10, 11, 12 gebildeten Betätigungsvorrichtung weitgehend ausgeschlossen und deren Funktionssicherheit erhöht.

### BEZUGSZEICHENLISTE

- 1: Schalthebel
- 1': Schalthebel
- 2: Rückwärtsgangsperre
- 3: Schalthebellagerung
- 4: Schalthebelachse
- 5: Schalthebelkörper
- 6: Wählachse
- 7: Schaltachse
- 8: karosserieseitiges Sperrelement
- 9: schalthebelseitiges Sperrelement
- 10: Zugring
- 11: Seilzug
- 11': Seilzug
- 12: Verbindungselement
- 13: Führungselement
- 13': Führungselement
- 14: Schaltknauf
- 15: obere Rückstellfeder
- 16: untere Rückstellfeder
- 17: Verschwenken (um die Wählachse)
- 18: Führungshülse
- 19: Führungsnut

## Patentansprüche

1. Schalthebel, insbesondere für eine Schaltvorrichtung eines manuell schaltbaren Kraftfahrzeuggetriebes, mit einem Schalthebelkörper (5), mit einer formschlüssig wirksamen Rückwärtsgangsperre (2), die ein weitgehend unbewegliches karosserieseitiges Sperrelement (8) und ein auf dem Schalthebelkörper (5) beweglich gelagertes schalthebelseitiges Sperrelement (9) umfasst, und mit einer Schalthebellagerung (3), mittels der der Schalthebel (1) um eine Wahlachse (6) und um eine im wesentlichen senkrecht dazu angeordnete Schaltachse (7) schwenkbar gelagert ist, wobei die Rückwärtsgangsperre (2) unterhalb der Schalthebellagerung (3) angeordnet ist, wobei das schalthebelseitige Sperrelement (9) zur Lösung der Rückwärtsgangsperre (2) durch einen auf dem Schalthebelkörper (5) angeordneten Zugring (10) betätigbar ist, und wobei mindestens ein flexibles, einteiliges und zur Verringerung des Bauvolumens an dem Schalthebelkörper eng anliegendes Verbindungselement (12), das außerhalb des Schalthebelkörpers (5) und außerhalb der Schalthebellagerung (3) angeordnet ist, den Zugring (10) mit dem schalthebelseitigen Sperrelement (9) unmittelbar verbindet.

2. Schalthebel nach Anspruch 1, wobei das Verbindungselement (12) als Zugseil (11) ausgebildet ist.

3. Schalthebel nach Anspruch 1 oder 2, wobei das Verbindungselement (12) zur Verbesserung der Funktionssicherheit geführt gelagert ist.

4. Schalthebel nach Anspruch 3, wobei zur Führung des Verbindungselementes (12) ein Führungselement (13) vorgesehen ist, und dass das Führungselement im Bereich der Schalthebellagerung (3) angeordnet ist.

5. Schalthebel nach Anspruch 4, wobei das Führungselement (13) als Führungshülse (18) ausgebildet und im Bereich der Schalthebellagerung (3) an dem Schalthebelkörper (5) befestigt ist.

6. Schalthebel nach Anspruch 3, wobei zur Führung des Verbindungselementes (12) eine im Bereich der Schalthebellagerung (3) in dem Schalthebelkörper (5) angeordnete Führungsnut (19) vorgesehen ist.

7. Schalthebel nach einem der Ansprüche 1 bis 6, wobei zur Vermeidung einer asymmetrischen Belastung des Zugringes (10) und des schalthebelseitigen Sperrelementes (9) mindestens zwei in Bezug auf eine Schalthebelachse (4) diametral zueinander angeordnete Verbindungselemente (12) vorgesehen sind.

## Claims

1. Shift lever, in particular for a shift device of a manually shiftable motor vehicle transmission, with a shift-lever body (5), with a positively active reverse gear lock (2) which comprises a largely immovable body-side locking element (8) and a shift-lever-side locking element (9) mounted movably on the shift-lever body (5), and with a shift-lever mounting (3), by means of which the shift lever (1) is mounted pivotably about a selection axis (6) and about a shift axis (7) arranged essentially perpendicularly to the latter, the reverse gear lock (2) being arranged below the shift-lever mounting (3), the shift-lever-side locking element (9) being actuable, for the release of the reserve gear lock (2), by means of a pull ring (10) arranged on the shift-lever body (5), and at least one flexible one-piece connection element (12), which bears closely against the shift-lever body to reduce the overall volume and is arranged outside the shift-lever body (5) and outside the shift-lever mounting (3), connecting the pull ring (10) directly to the shift-lever-side locking element (9).

2. Shift lever according to Claim 1, the connection element (12) being designed as a pull cable (11).

3. Shift lever according to Claim 1 or 2, the connection element (12) being mounted, guided, to improve operating reliability.

4. Shift lever according to Claim 3, a guide element (13) being provided for guiding the connection element (12), and the guide element being arranged in the region of the shift-lever mounting (3).

5. Shift lever according to Claim 4, the guide element (13) being designed as a guide sleeve (18) and being fastened to the shift-lever body (5) in the region of the shift-lever mounting (3):

6. Shift lever according to Claim 3, a guide groove (19) arranged in the shift-lever body (5) in the region of the shift-lever mounting (3) being provided for guiding the connection element (12).

7. Shift lever according to one of Claims 1 to 6, at least two connection elements (12), which are arranged diametrically to one another with respect to a shift-lever axis (4), being provided in order to avoid an asymmetric load on the pull ring (10) and on the shift-lever-side locking element (9).

## Revendications

1. Levier de changement de vitesse, notamment pour un dispositif de changement de vitesse d'une boîte de vitesses de véhicule à transmission manuelle, avec un corps de levier de changement de vitesse (5), avec un verrouillage de marche arrière (2) à action par engagement positif, qui comprend un élément de verrouillage (8) substantiellement immobile du côté de la carrosserie et un élément de verrouillage (9) monté mobile sur le corps de levier de changement de vitesse (5) du côté du levier de changement de vitesse, et avec un support sur palier (3) du levier de changement de vitesse, au moyen duquel le levier de changement de vitesse (1) est monté de manière à pouvoir pivoter autour d'un axe de sélection (6) et autour d'un axe de changement de vitesse (7) disposé substantiellement perpendiculairement à lui, le verrouillage de marche arrière (2) étant disposé sous le support sur palier (3) du levier de changement de vitesse, l'élément de verrouillage (9) du côté du levier de changement de vitesse pouvant être actionné pour libérer le verrouillage de marche arrière (2) par un anneau de traction (10) disposé sur le corps du levier de changement de vitesse (5), et au moins un élément de connexion (12) flexible, réalisé d'une seule pièce et s'appliquant étroitement contre le corps du levier de changement de vitesse pour réduire le volume de construction, lequel est disposé en dehors du corps du levier de changement de vitesse (5) et en dehors du support sur palier (3) du levier de changement de vitesse, relie directement l'anneau de traction (10) à l'élément de verrouillage (9) du côté du levier de changement de vitesse.

2. Levier de changement de vitesse selon la revendication 1, dans lequel l'élément de connexion (12) est réalisé sous forme de câble de traction (11).

3. Levier de changement de vitesse selon la revendication 1 ou 2, dans lequel l'élément de connexion (12) est monté de manière guidée pour améliorer la sécurité de fonctionnement.

4. Levier de changement de vitesse selon la revendication 3, dans lequel, pour le guidage de l'élément de connexion (12), on prévoit un élément de guidage (13) et en ce que l'élément de guidage est disposé dans la région du support sur palier (3) du levier de changement de vitesse.

5. Levier de changement de vitesse selon la revendication 4, dans lequel l'élément de guidage (13) est réalisé sous forme de manchon de guidage (18) et est fixé dans la région du support sur palier (3) du levier de changement de vitesse sur le corps du levier de changement de vitesse (5).

6. Levier de changement de vitesse selon la revendication 3, dans lequel, pour le guidage de l'élément de connexion (12), on prévoit une rainure de guidage (19) disposée dans le corps du levier de changement de vitesse (5) dans la région du support sur palier (3) du levier de changement de vitesse.

7. Levier de changement de vitesse selon l'une quelconque des revendications 1 à 6, dans lequel, pour éviter une sollicitation asymétrique de l'anneau de traction (10) et de l'élément de verrouillage (9) du côté du levier de changement de vitesse, on prévoit au moins deux éléments de connexion (12) disposés diamétralement l'un par rapport à l'autre par rapport à un axe (4) du levier de changement de vitesse.
